# EUROPEAN PATENT APPLICATION

(11) **EP 3 553 920 A1**
(43) Date of publication of application: **16.10.2019**
(21) Application number: 18166651.2
(22) Date of filing: 10.04.2018
(51) Int. Cl.: H02K 1/20, H02K 9/02, H02K 15/02, H02K 15/12

(54) **COOLING DEVICE FOR A STATOR OF AN ELECTRICAL GENERATOR**

(71) Applicant: Siemens Gamesa Renewable Energy A/S, 7330 Brande (DK)
(72) Inventor: Airoldi, Giovanni, 8000 Aarhus (DK)
(74) Representative: Aspacher, Karl-Georg

(57) **Abstract**

A stator (20) for an electrical generator (11) comprises a frame body (21) longitudinally extending along a longitudinal axis (Y) of the stator (20) and a plurality of teeth (33) protruding according to a radial direction orthogonal to the longitudinal axis (Y) from the frame body (21), the frame body (21) further including a plurality of stator axial segments (34), two adjacent stator axial segments (34) being separated by a cooling duct (35) for letting a cooling fluid flow in the cooling duct (35), at least one spacer (40) being provided in the cooling duct (35) for axially connecting the two adjacent tooth axial segments (34). A fin (50) is further provided in the cooling duct (35) for exchanging heat with the cooling fluid flow.

## Description

### Field of invention

The present invention relates to a stator for an electrical generator having devices for enhancing the cooling of the stator. Particularly, but not exclusively, the present invention may be efficiently applied to an electrical permanent magnet generator of a wind turbine.

### Art Background

An electrical generator, such as an electric generator installed in a wind turbine, typically comprises a rotor which rotates relative to a stator.

The stator normally comprises a frame body longitudinally extending along a longitudinal axis and including a stator yoke and a plurality of teeth protruding according to a radial direction from the stator yoke to respective tooth radial ends. Each tooth extends also longitudinally between a first tooth longitudinal end and a second tooth longitudinal end. In the stator a plurality of slots are also defined, each slot being delimited circumferentially by two adjacent teeth and being radially extended between the stator yoke and the respective tooth radial ends. Each slot houses a respective winding.

The windings are connected at the first tooth longitudinal end and at the second tooth longitudinal end of the teeth by a plurality of end-windings, axially protruding from the frame body.

The stator and the windings are generally cooled by blowing air inside the stator, e.g. by blowing air through the windings and through an air gap between the rotor and the stator or through radial extending ducts within the stator.

The stator may consist of a plurality of stator lamination sheets which are attached one after another along the axial direction of the stator and form a stator stack of the stator. Axial gaps along the stator stack may be provided to form cooling ducts. To form such cooling ducts spacers are inserted between two adjacent laminated sheets and welded thereto. A cooling fluid, typically air, may stream through the cooling duct prevalently along a radial direction of the generator. The cooling fluid first flows around the end windings, then to the air gap between rotor and stator, then enters the stator cooling ducts and exits the stator in a central stator cavity. Heat dissipated in the stator may be transferred to the cooling fluid and may be transported away from the stator.

Each spacer typically extends radially along a respective cooling duct of the stator. In a comparatively recent design, the effective area for heat exchange in the stator is increased by having a high number of cooling ducts obtained by punching the lamination sheets in a specially designed appropriate way.

This proved to be successful from a thermal point of view however, it carries some disadvantages: the lamination design increases the iron losses and reduces the output power. Further, the size of ducts cannot be reduced indefinitely: created have a minimum size below which they would get clogged by resin during a Vacuum Pressure Impregnation (V.P.I) process.

Therefore, there is still a need to provide an improved design for a stator of an electrical generator, which optimizes or improves the cooling effect of the cooling fluid circulated along the spacers in the cooling ducts of the stator by avoiding the inconveniences above described, with reference to the prior art.

### Summary of the invention

This need may be met by the subject matter according to the independent claims. Advantageous embodiments of the present invention are described by the dependent claims.

According to a first aspect of the invention, it is provided a stator for an electrical generator comprising a frame body longitudinally extending along a longitudinal axis of the stator and including a plurality of teeth protruding according to a radial direction orthogonal to the longitudinal axis from the frame body, the frame body further including a plurality of stator axial segments, two adjacent stator axial segments being separated by a cooling duct for letting a cooling fluid flow in the cooling duct, at least one spacer being provided in the cooling duct for axially connecting the two adjacent tooth axial segments, wherein at least a fin is further provided in the cooling duct for exchanging heat with the cooling fluid flow.

The above described stator for an electric generator may be advantageously integrated in a wind turbine.

According to a second aspect of the invention, it is provided a method of manufacturing a stator for an electrical generator, the method including the following sequence of steps:
- a first step of manufacturing a frame body longitudinally extending along a longitudinal axis and including a plurality of teeth protruding according to a radial direction orthogonal to the longitudinal axis from the frame body, the frame body further including a plurality of stator axial segments, two adjacent stator axial segments being separated by a respective cooling duct for letting a cooling fluid flow in the cooling duct, at least one spacer being provided in the cooling duct for axially connecting the two adjacent tooth axial segments, the frame body further including a plurality of slots, each slot being circumferential delimited by a pair of circumferentially adjacent teeth,
- a second step of providing a plurality of windings in the plurality of slots,
- a third step of applying vacuum pressure impregnation to the assembly including the frame body and the plurality of windings,
- a fourth step of providing at least a fin in the cooling duct.

With "Vacuum Pressure Impregnation" (V.P.I) it is meant a process by which a fully wound assembly including the frame body and the plurality of windings is completely submerged in a resin and through a combination of dry and wet vacuum and pressure cycles, the resin is assimilated throughout the assembly, in particular throughout the insulation system of the windings. Once thermally processed, the impregnated windings become a monolithic and homogenous structure.

The fins may be, in particular, made of aluminum, in order to optimize the heat transfer coefficient.

Advantageously, the aluminum fins inserted in the cooling ducts permit to obtain an increase of both convective heat transfer coefficient and heat exchange area. The insertion is to be done after the vacuum pressure impregnation process is completed. In this way the electromagnetic behavior of the lamination is not compromised and the thermal behavior is enhanced. Due to the increase in area consequent to the aluminum fins, the number of ducts in the axial direction could even be reduced, allowing a higher amount of lamination steel in the generator hence a higher specific power output. A possible slight increase in the pressure drop on the air side is largely compensated by the superior convective heat exchange performance provided by the fins.

According to embodiments of the invention, the at least one fin is provided in the cooling duct between the at least one spacer and a respective slot. In particular, two respective fins and one spacer may be provided in the cooling duct, each fin being respectively provided between the spacer and a respective slot of the two slots circumferentially delimiting the cooling duct. The two fins may be symmetric configured with respect to the spacer.

According to an embodiment of the invention, the at least one fin has a "V" shape radially extending along the cooling duct with two sides symmetrically configured with respect to a plane orthogonal to the longitudinal axis of the stator.

It has to be noted that embodiments of the invention have been described with reference to different subject matters. In particular, some embodiments have been described with reference to device type claims whereas other embodiments have been described with reference to method type claims. However, a person skilled in the art will gather from the above and the following description that, unless other notified, in addition to any combination of features belonging to one type of subject matter, also any combination between features relating to different subject matters, in particular between features of the device type claims and features of the method type claims, is considered as to be disclosed with this application.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

- Figure 1: shows a schematic section of a wind turbine including an electrical generator with a stator according to the present invention.
- Figure 2: shows a schematic top view of a stator for an electrical generator according to the present invention.
- Figure 3: shows a partial top view of the stator of Figure 2.
- Figure 4: shows a magnified view of the detail III shown in figure 3.

### Detailed Description

The illustrations in the drawings are schematic. It is noted that in different figures, similar or identical elements are provided with the same reference signs.

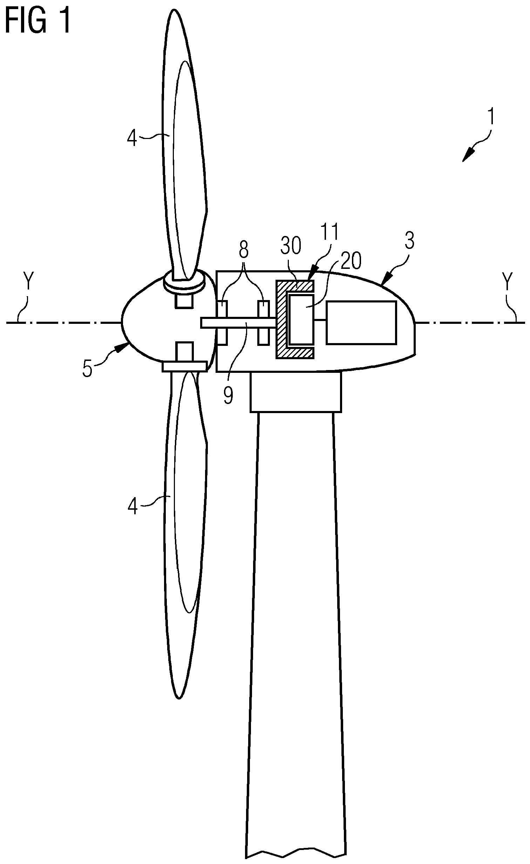

**Figure 1** shows a wind turbine 1 according to the invention. The wind turbine 1 comprises a tower 2, which is mounted on a non-depicted foundation. A nacelle 3 is arranged on top of the tower 2.
The wind turbine 1 further comprises a wind rotor 5 having at least one blade 4 (in the embodiment of Figure 1, the wind rotor comprises three blades 4, of which only two blades 4 are visible). The wind rotor 5 is rotatable around a rotational axis Y.
The blades 4 extend substantially radially with respect to the rotational axis Y.
In general, when not differently specified, the terms axial, radial and circumferential in the following are made with reference to the rotational axis Y.

The wind turbine 1 comprises an electric generator 11, including a stator 20 and a rotor 30. The rotor 30 is rotatable with respect to the stator 20 about the rotational axis Y. The wind rotor 5 is rotationally coupled with the electric generator 11 either directly, e.g. direct drive or by means of a rotatable main shaft 9 and/or through a gear box (not shown in Figure 1). A schematically depicted bearing assembly 8 is provided in order to hold in place the main shaft 9 and the rotor 5. The rotatable main shaft 9 extends along the rotational axis Y.

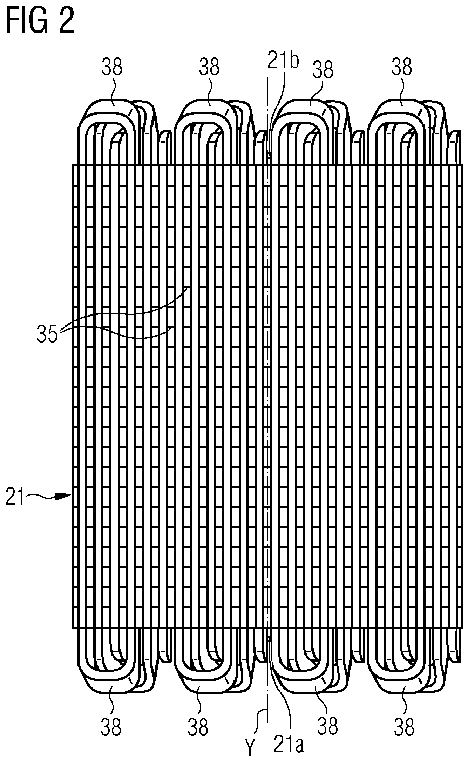

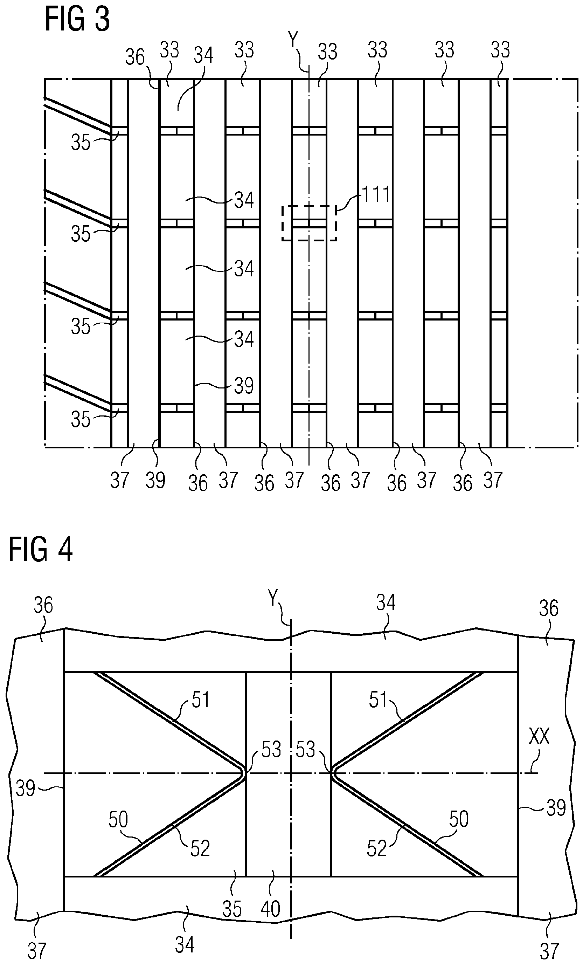

**Figures 2** and **3** show more in detail the stator 20 comprising a frame body 21, which has a conventional lamination structure including a central stator yoke (not shown) and a plurality of teeth 33 protruding according to a radial direction orthogonal to the longitudinal axis Y from the stator yoke. Each tooth 33 is circumferentially delimited by two respective lateral surfaces 39. Each tooth 33 extends longitudinally between a first tooth longitudinal end 21a and a second tooth longitudinal end 21b.
The frame body 21 of the stator 20 further includes a plurality of slots 36, each slots being circumferential delimited by a pair of circumferentially adjacent teeth 33. Each slot 36 houses a respective winding 37. The plurality of windings 37 are connected at the first tooth longitudinal end 21a and at the second tooth longitudinal end 21b by a plurality of end-windings 38, axially protruding from the frame body 21. The frame body 21 includes a plurality of stator axial segments 34, two adjacent stator axial segments 34 being separated by a cooling duct 35 for letting a cooling fluid flow in the cooling duct 35.
For each tooth 33, the frame body 21 includes a spacer 40 provided in each cooling duct 35 for axially connecting the two adjacent tooth axial segments 34.
At least a fin 50 is provided in the cooling duct 35, as better detailed in the following, for exchanging heat with the cooling fluid flow.

According to possible embodiments of the present invention, the fins 50 are made of aluminum.

**Figure 4** shows a magnified view of a portion of each cooling duct 35 of the figures 2 and 3, circumferentially comprised between the lateral surfaces 39 of two adjacent teeth 33 and longitudinally comprised between two adjacent stator axial segments 34. Such portion of cooling duct 35 comprises one spacer 40 and two fins 50 symmetric configured with respect to the spacer 40.
According to other embodiments of the present invention (not shown) other fin configurations may be possible, for example with only one fin per each spacer or with more than two fins for each spacer.
In any case, the presence of the fins 50 in the cooling ducts 35 permits an increase of both convective heat transfer coefficient and heat exchange area in the cooling duct 35, independently from the spacers 40.
Each fin 50 is respectively provided between the spacer 40 and a respective lateral surface 39 of one tooth 33. Consequently, each fin 50 is also provided between the spacer 40 and a respective slot 36 of the two slots 36 circumferentially delimiting the cooling duct 35.
Each fin 50 has a "V" shape including a vertex 53 in contact with the spacer and the sides 51, 52 symmetrically configured with respect to a symmetry plane XX orthogonal to the longitudinal axis Y. The symmetry plane XX is intermediate between the two adjacent stator axial segments 34.
The profile of each fin 50, as shown in figure 4, radially extends along the cooling duct 35, between the stator yoke and a circumferential periphery of the stator body 21.

When manufacturing the stator 20, it is first manufactured the frame body 21 including the teeth 33, the slots 36 and the stator axial segments 34 separated by the respective cooling ducts 35, where the spacers 40 are provided. Subsequently, the windings 37 are provided in the plurality of slots 36. Further subsequently a manufacturing step of applying a vacuum pressure impregnation (V.P.I) process to the assembly including the frame body 21 and the plurality of windings 37 is performed.

In a final step the fins 50 are inserted in the cooling ducts 35. By inserting the fins 50 after the vacuum impregnation process is completed, the electromagnetic behavior of the lamination is not compromised and the thermal behavior is enhanced.

## Claims

1. Stator (20) for an electrical generator (11) comprising a frame body (21) longitudinally extending along a longitudinal axis (Y) of the stator (20) and including a plurality of teeth (33) protruding according to a radial direction orthogonal to the longitudinal axis (Y) from the frame body (21), the frame body (21) further including a plurality of stator axial segments (34), two adjacent stator axial segments (34) being separated by a cooling duct (35) for letting a cooling fluid flow in the cooling duct (35), at least one spacer (40) being provided in the cooling duct (35) for axially connecting the two adjacent tooth axial segments (34), wherein at least a fin (50) is further provided in the cooling duct (35) for exchanging heat with the cooling fluid flow.

2. Stator (20) as claimed in claim 1, wherein the frame body (21) of the stator (20) further includes a plurality of slots (36), each slot (36) being circumferential delimited by a pair of circumferentially adjacent teeth (33), the at least one spacer (40) being provided in the cooling duct (35) between a pair of circumferentially adjacent slots (36), the at least one fin (50) being provided in the cooling duct (35) between the at least one spacer (40) and a respective slot (36).

3. Stator (20) as claimed in claim 2, wherein at least two respective fins (50) and one spacer (40) are provided in the cooling duct (35), each fin (50) being respectively provided between the spacer (40) and a respective slot (36) of the two slots (36) circumferentially delimiting the cooling duct (35).

4. Stator (20) as claimed in claim 3, wherein the fins (50) are symmetric with respect to the spacer (40).

5. Stator (20) as claimed in any of the previous claims, wherein the at least one fin (50) has a "V" shape radially extending along the cooling duct (35).

6. Stator (20) as claimed in claim 5, wherein the at least one fin (50) has two sides (51, 52) symmetrically configured with respect to a plane (XX) orthogonal to the longitudinal axis (Y) of the stator (20).

7. Stator (20) as claimed in any of the previous claims, wherein the at least one fin (50) is made of aluminum.

8. Electrical generator (11) comprising a stator (20) according to any of the previous claims.

9. Wind turbine comprising an electrical generator (11) according to the previous claim 8.

10. Method of manufacturing a stator (20) for an electrical generator (11), the method including the following sequence of steps:
- a first step of manufacturing a frame body (21) longitudinally extending along a longitudinal axis (Y) and including a plurality of teeth (33) protruding according to a radial direction orthogonal to the longitudinal axis (Y) from the frame body (21), the frame body (21) further including a plurality of stator axial segments (34), two adjacent stator axial segments (34) being separated by a respective cooling duct (35) for letting a cooling fluid flow in the cooling duct (35), at least one spacer (40) being provided in the cooling duct (35) for axially connecting the two adjacent tooth axial segments (34), the frame body (21) further including a plurality of slots (36), each slot (36) being circumferential delimited by a pair of circumferentially adjacent teeth (33),
- a second step of providing a plurality of windings (37) in the plurality of slots (36),
- a third step of applying vacuum pressure impregnation to the assembly including the frame body (21) and the plurality of windings (37),
- a fourth step of providing at least a fin (50) in the cooling duct (35).
